# EUROPÄISCHE PATENTSCHRIFT

(11) **EP 4 073 828 B1**
(45) Veröffentlichungstag und Bekanntmachung des Hinweises auf die Patenterteilung: **04.03.2026**
(21) Anmeldenummer: 20839104.5
(22) Anmeldetag: 28.12.2020
(51) Int. Cl.: H01F 38/26, H01F 27/29, H01H 1/58, H01H 1/16

(54) **SPANNUNGSWANDLER**
VOLTAGE TRANSFORMER
TRANSFORMATEUR DE TENSION

(30) Priorität: 28.01.2020 DE 102020200986
(43) Veröffentlichungstag der Anmeldung: 19.10.2022
(73) Patentinhaber: HSP Hochspannungsgeräte GmbH, 53842 Troisdorf (DE)
(72) Erfinder: KNAB, Wolfgang, 96103 Hallstadt (DE)
(74) Vertreter: Betten & Resch
(86) Internationale Anmeldenummer: PCT/EP2020/087900
(87) Internationale Veröffentlichungsnummer: WO 2021/151603

(56) Entgegenhaltungen:
- WO-A1-2016/012444
- DE-A1- 102010 060 696
- DE-C- 532 674

## Beschreibung

Die Erfindung betrifft einen Spannungswandler.

Insbesondere betrifft die Erfindung einen Spannungswandler für eine Hochspannungsschaltanlage. Mit einem derartigen Spannungswandler werden hohe Spannungen proportional und phasengenau zu Mess-, Schutz- oder Steuerungszwecken auf niedrigere Werte transformiert. Ein induktiver Spannungswandler weist dazu in der Regel wenigstens einen Magnetkern auf, um den herum eine Primärwicklung und wenigstens eine Sekundärwicklung verlaufen. In speziellen Betriebszuständen einer Schaltanlage, beispielsweise für bestimmte Inbetriebnahmeprüfungen, ist es erforderlich, den Spannungswandler von der restlichen Schaltanlage zu isolieren, da der Spannungswandler andernfalls beschädigt oder zerstört werden könnte. Dazu kann der Spannungswandler beispielsweise eine Isoliervorrichtung aufweisen, mit der elektrische Verbindungen zwischen dem Spannungswandler und der restlichen Schaltanlage trennbar sind.

Aus der DE 10 2010 060696 A1 und der WO 2016/012444 A1 sind induktive Spannungswandler für hohe Spannungen bekannt, deren Kontaktelemente einen Schleifkontakt mit einer Elektrode aufweisen. DE 532 674 C offenbart einen regelbaren Drahtwiderstand mit einem auf den Drahtwindungen entlang geführten Rollkontakt.

Der Erfindung liegt die Aufgabe zugrunde, einen Spannungswandler anzugeben, dessen Kontaktierung mit dem Kontaktelement verbessert ist, insbesondere der Verschleiß des Kontaktelements reduziert wird.

Die Aufgabe wird erfindungsgemäß durch einen Spannungswandler mit den Merkmalen des Anspruchs 1 gelöst.

Bei dem erfindungsgemäßen Spannungswandler wird vorteilhaft die Reibung zwischen dem Kontaktelement und der Elektrode und/oder dem Durchführungskontakt reduziert und somit der Verschleiß des Kontaktelements reduziert.

Vorteilhafte Ausgestaltungen der Erfindung sind Gegenstand der Unteransprüche.

Ein erfindungsgemäßer Spannungswandler ermöglicht das Öffnen und Schließen wenigstens eines Strompfads zwischen einer Primärwicklung und einem zugehörigen Durchführungskontakt des Spannungswandlers durch Drehen eines Trägerelements, an dem für jeden dieser Strompfade ein Kontaktelement angeordnet ist. Der Strompfad wird in einer ersten Endstellung des Trägerelements durch das Kontaktelement geschlossen und in einer zweiten Endstellung des Trägerelements geöffnet. Das Kontaktelement kontaktiert in der ersten Endstellung eine mit einem Ende der Primärwicklung elektrisch verbundene Elektrode oder/und den Durchführungskontakt durch einen Rollkontakt. Dadurch wird vorteilhaft die Reibung zwischen dem Kontaktelement und der Elektrode und/oder dem Durchführungskontakt reduziert, beispielsweise gegenüber einem Gleitkontakt zwischen dem Kontaktelement und der Elektrode und/oder dem Durchführungskontakt (Rollreibung statt Gleitreibung). Durch die geringere Reibung wird auch der Verschleiß eines Rollkontakts beispielsweise gegenüber einem Gleitkontakt reduziert.

Bei einer Ausgestaltung der Erfindung weist jedes Kontaktelement einen ersten Rollkontakt, der in der ersten Endstellung des Trägerelements die Elektrode der dem Kontaktelement zugeordneten Primärwicklung kontaktiert, und einen zweiten Rollkontakt, der in der ersten Endstellung des Trägerelements den dem Kontaktelement zugeordneten Durchführungskontakt kontaktiert, auf.

Mit anderen Worten sieht die vorgenannte Ausgestaltung der Erfindung vor, dass jedes Kontaktelement zwei Rollkontakte aufweist, von denen in der ersten Endstellung einer die Elektrode einer Primärwicklung kontaktiert und der andere einen Durchführungskontakt kontaktiert, und die in der zweiten Endstellung jeweils von der Elektrode und dem Durchführungskontakt getrennt sind. Auf diese Weise schließt und trennt jedes Kontaktelement eine elektrische Verbindung zwischen der Elektrode einer Primärwicklung und dem zugehörigen Durchführungskontakt sowohl seitens der Elektrode als auch seitens des Durchführungskontakts vorteilhaft durch einen reibungsarmen Rollkontakt.

Bei einer weiteren Ausgestaltung der Erfindung weist wenigstens ein Rollkontakt ein Wälzlager mit einem elektrisch leitfähigen Außenring auf, der in der ersten Endstellung des Trägerelements die Elektrode der dem Kontaktelement zugeordneten Primärwicklung oder den dem Kontaktelement zugeordneten Durchführungskontakt kontaktiert. Bei dieser Ausgestaltung der Erfindung wird die elektrische Verbindung des Rollkontakts zu der Elektrode einer Primärwicklung oder einem Durchführungskontakt also durch den Außenring eines Wälzlagers hergestellt.

Bei einer Weitergestaltung der vorgenannten Ausgestaltung der Erfindung weist jeder ein Wälzlager aufweisender Rollkontakt eine elektrisch leitfähige Halterung auf, in der das Wälzlager angeordnet ist und die mit dem Außenring des Wälzlagers durch einen Gleitkontakt elektrisch verbunden ist. Durch die elektrische Verbindung des Außenrings mit der Halterung über den Gleitkontakt wird vorteilhaft die Gefahr vermieden, dass durch hohe Ströme aufgrund von schnellen Transienten Verschweißungen entstehen, die beispielsweise zwischen dem Außenring und der Halterung durch Lichtbögen verursacht werden, die durch Spiel zwischen dem Außenring und der Halterung erzeugt werden.

Bei einer weiteren Ausgestaltung der Erfindung weist wenigstens ein Rollkontakt eine in einem elektrisch leitfähigen Gleitlager gelagerte elektrisch leitfähige Kugel auf, die in der ersten Endstellung des Trägerelements die Elektrode der dem Kontaktelement zugeordneten Primärwicklung oder den dem Kontaktelement zugeordneten Durchführungskontakt kontaktiert.

Bei dieser Ausgestaltung der Erfindung wird die elektrische Verbindung des Rollkontakts zu der Elektrode einer Primärwicklung oder einem Durchführungskontakt also durch die in dem Gleitlager gelagerte Kugel hergestellt.

Bei einer weiteren Ausgestaltung der Erfindung ist jeder Rollkontakt eines Kontaktelements federnd an einem Grundkörper des Kontaktelements gelagert. Dadurch können sich die Position des Rollkontakts an dem Kontaktelement und ein Anpressdruck des Rollkontakts beim Kontaktieren der Elektrode einer Primärwicklung oder einem Durchführungskontakt flexibel der Oberfläche der Elektrode beziehungsweise des Durchführungskontakts anpassen.

Gemäss der Erfindung ist jeder Rollkontakt eines Kontaktelements durch wenigstens ein Blattfederelement federnd an einem Grundkörper des Kontaktelements gelagert, wobei jedes Blattfederelement den durch das Blattfederelement federnd gelagerten Rollkontakt elektrisch mit dem Grundkörper des Kontaktelements verbinden. Die federnde Lagerung eines Rollkontakts und die elektrische Verbindung des Rollkontakts mit dem Grundkörper des Kontaktelements durch ein Blattfederelement hat beispielsweise gegenüber der Verwendung einer Schraubenfeder den Vorteil, dass ein Blattfederelement eine geringe Induktivität aufweist. Bei einer Weitergestaltung der vorgenannten Ausgestaltungen der Erfindung ist jeder Rollkontakt federnd in einer Öffnung des Grundkörpers des Kontaktelements gelagert. Ferner kann jede Öffnung des Grundkörpers eines Kontaktelements, in der ein Rollkontakt federnd gelagert ist, von einer Wand des Grundkörpers mit einer konvexen Außenoberfläche umgeben sein. Durch die Lagerung eines Rollkontakts in einer Öffnung des Grundkörpers des Kontaktelements kann der Rollkontakt vorteilhaft geschützt werden. Die Ausführung der Öffnung durch eine sie umgebende Wand mit einer geeigneten konvexen Außenoberfläche bewirkt außerdem vorteilhaft eine elektrische Abschirmung des Rollkontakts.

Bei einer weiteren Ausgestaltung der Erfindung weist der Spannungswandler drei Primärwicklungen auf, die voneinander beabstandet um die Drehachse des Trägerelements herum angeordnet sind. Insbesondere können die Primärwicklungen um 120 Grad gegeneinander versetzt um die Drehachse des Trägerelements herum angeordnet und das Trägerelement kann um 60 Grad um die Drehachse zwischen den beiden Endstellungen drehbar sein. Diese Ausgestaltungen der Erfindung realisieren insbesondere eine für dreiphasige Wechselspannungen geeignete Auslegung des Spannungswandlers.

Bei einer weiteren Ausgestaltung der Erfindung weist das Trägerelement eine Trägerplatte, an der jedes Kontaktelement angeordnet ist, und eine mit der Trägerplatte verbundene Trägerwelle, durch die die Drehachse verläuft, auf. Die Trägerplatte ist beispielsweise in einer Ebene zwischen einem ersten Raumbereich, in dem jede Primärwicklung angeordnet ist, und einem zweiten Raumbereich, in dem jeder Durchführungskontakt angeordnet ist, angeordnet. Diese Ausgestaltungen der Erfindung realisieren eine geometrisch einfache und zweckmäßige Ausführung und Anordnung des Trägerelements.

Bei einer weiteren Ausgestaltung der Erfindung weist jeder Durchführungskontakt eine konvexe Kontaktoberfläche auf, die in der ersten Endstellung des Trägerelements von einem Rollkontakt kontaktiert wird. Diese Ausgestaltung der Erfindung ermöglicht vorteilhaft ein sanftes Verbinden und Trennen eines Durchführungskontakts mit beziehungsweise von einem Rollkontakt.

Erfindungsgemäß weist der Spannungswandler ein Kapselungsgehäuse auf, in dem jede Primärwicklung, jeder Durchführungskontakt, das Trägerelement und jedes Kontaktelement angeordnet sind. Dadurch können die Komponenten des Spannungswandlers vorteilhaft vor widrigen Bedingungen wie Feuchtigkeit in einer Umgebung des Spannungswandlers geschützt werden. Außerdem kann das Kapselungsgehäuse erforderlichenfalls gasdicht ausgeführt werden, um mit einem Isoliergas befüllt zu werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines ersten Ausführungsbeispiels eines Spannungswandlers,
- FIG 2: eine perspektivische Darstellung des in Figur 1 gezeigten Spannungswandlers im Bereich eines Kontaktelements,
- Fig 3: eine Schnittdarstellung eines Kontaktelements des in Figur 1 gezeigten Spannungswandlers,
- FIG 4: eine perspektivische Darstellung des in Figur 3 gezeigten Kontaktelements,
- FIG 5: schematisch einen Rollkontakt eines zweiten Ausführungsbeispiels eines Spannungswandlers.

Einander entsprechende Teile sind in den Figuren mit denselben Bezugszeichen versehen.

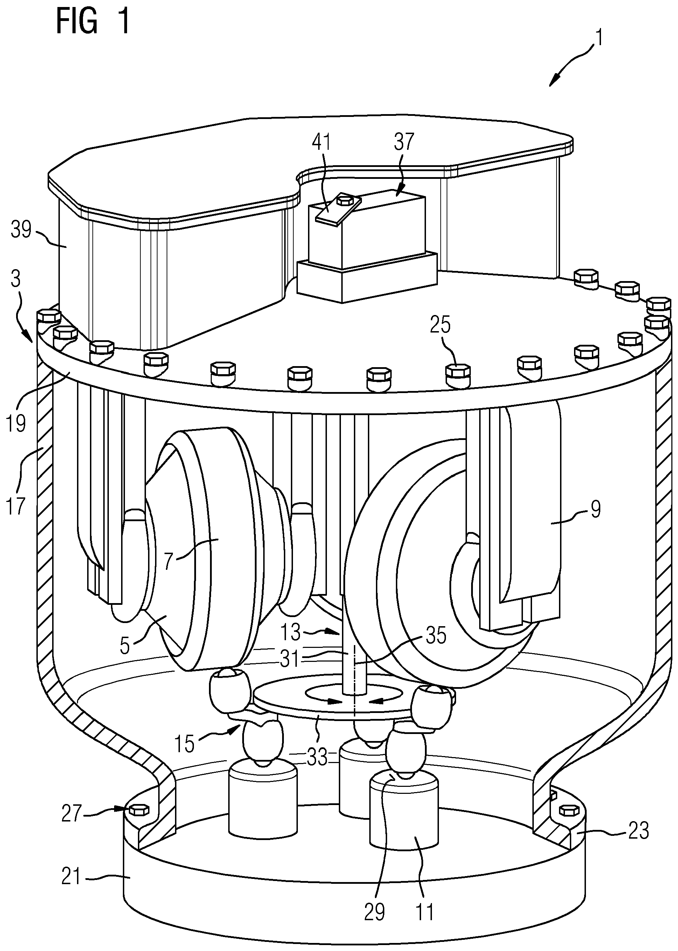

Figur 1 (FIG 1) zeigt eine perspektivische Darstellung eines ersten Ausführungsbeispiels eines Spannungswandlers 1. Der Spannungswandler 1 umfasst ein Kapselungsgehäuse 3, drei Primärwicklungen 5, drei Sekundärwicklungen, drei Elektroden 7, drei Magnetkerne 9, drei Durchführungskontakte 11, ein Trägerelement 13 und drei elektrisch leitfähige Kontaktelemente 15. Der Spannungswandler 1 ist für dreiphasige Wechselspannungen ausgelegt.

Das Kapselungsgehäuse 3 ist aufgebrochen dargestellt und umfasst einen Gehäusemantel 17, einen Gehäusedeckel 19 und eine Durchführung 21. Der Gehäusemantel 17 ist oberseitig durch den Gehäusedeckel 19 und unterseitig durch die Durchführung 21 verschlossen. Durchführungsseitig weist der Gehäusemantel 17 einen Flansch 23 auf, an dem die Durchführung 21 angeordnet ist. Der Gehäusemantel 17 ist mit dem Gehäusedeckel 19 und der Durchführung 21 jeweils durch Schraubverbindungen 25, 27 verbunden. Die Sekundärwicklungen, Primärwicklungen 5, Elektroden 7, Magnetkerne 9, Durchführungskontakte 11, Kontaktelemente 15 und das Trägerelement 13 sind in dem Kapselungsgehäuse 3 angeordnet.

Die Durchführungskontakte 11 sind an der Durchführung 21 angeordnet und können jeweils durch die Durchführung 21 hindurch von außen elektrisch kontaktiert werden, um die Durchführungskontakte 11 an elektrische Leiter beispielsweise einer Schaltanlage anzuschließen. Jeder Durchführungskontakt 11 weist eine dem Gehäusedeckel 19 zugewandte konvexe Kontaktoberfläche 29 auf.

Das Trägerelement 13 umfasst eine Trägerwelle 31 und eine an der Trägerwelle 31 angeordnete Trägerplatte 33. Das Trägerelement 13 ist um 60 Grad zwischen einer ersten Endstellung und einer zweiten Endstellung um eine Drehachse 35 drehbar, die mit der Längsachse der Trägerwelle 31 zusammenfällt. Der Gehäusemantel 17 ist im Wesentlichen rotationssymmetrisch bezüglich der Drehachse 35, welche im Wesentlichen mittig durch den Gehäusedeckel 19 und die Durchführung 21 verläuft.

Jeder Magnetkern 9 weist einen Schenkel auf, um den herum eine der Sekundärwicklungen und eine der Primärwicklungen 5 verläuft. Dabei verläuft die Primärwicklung 5 um die Sekundärwicklung herum, so dass die Sekundärwicklungen in Figur 1 nicht sichtbar sind. Die von den Sekundärwicklungen und Primärwicklungen 5 umgebenen Schenkel der Magnetkerne 9 sind in einer zu der Drehachse 35 senkrechten Ebene sternförmig um die Drehachse 35 herum und um 120 Grad gegeneinander versetzt angeordnet. Ein Ende jeder Primärwicklung 5 ist mit einer Elektrode 7 verbunden, die um einen Mittelabschnitt der Primärwicklung 5 herum angeordnet ist.

Die Trägerplatte 33 des Trägerelements 13 ist in einer Ebene zwischen einem ersten Raumbereich, in dem die Primärwicklungen 5 angeordnet sind, und einem zweiten Raumbereich, in dem die Durchführungskontakte 11 angeordnet sind, angeordnet.

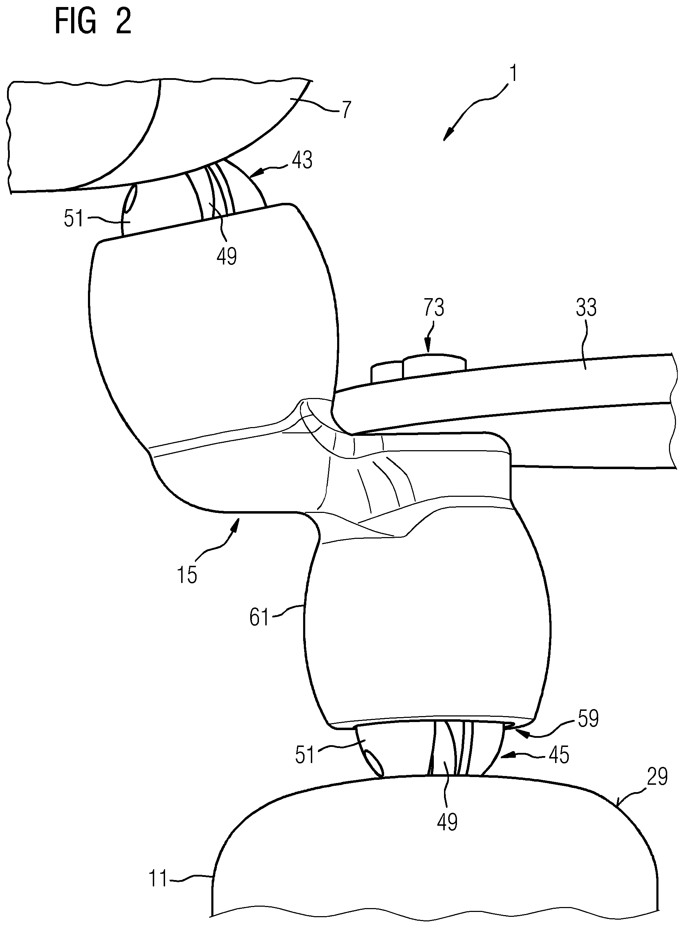

Die Kontaktelemente 15 sind an der Trägerplatte 33 angeordnet. Jedem Kontaktelement 15 sind eine Primärwicklung 5 und ein Durchführungskontakt 11 zugeordnet, die durch das Kontaktelement 15 in der ersten Endstellung des Trägerelements 13 miteinander elektrisch verbunden werden und in der zweiten Endstellung des Trägerelements 13 voneinander galvanisch getrennt sind. Die Kontaktelemente 15 des in Figur 1 gezeigten Spannungswandlers 1 werden unten anhand der Figuren 2 bis 4 näher beschrieben.

An dem Gehäusedeckel 19 sind eine Mechanik 37 zum Drehen des Trägerelements 13 und ein Anschlusskasten 39 für den Spannungswandler 1 angeordnet. Die Mechanik 37 umfasst einen Hebel 41, mit dem das Trägerelement 13 manuell zwischen seinen beiden Endstellungen gedreht werden kann.

Figur 2 (FIG 2) zeigt eine perspektivische Darstellung des in Figur 1 gezeigten Spannungswandlers 1 im Bereich eines Kontaktelements 15.

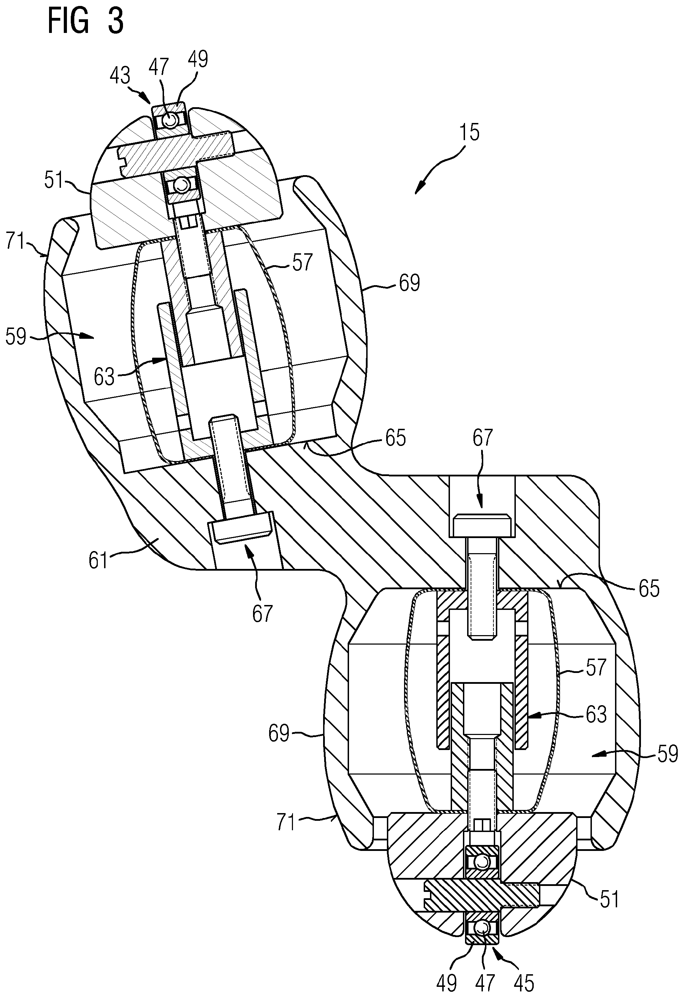

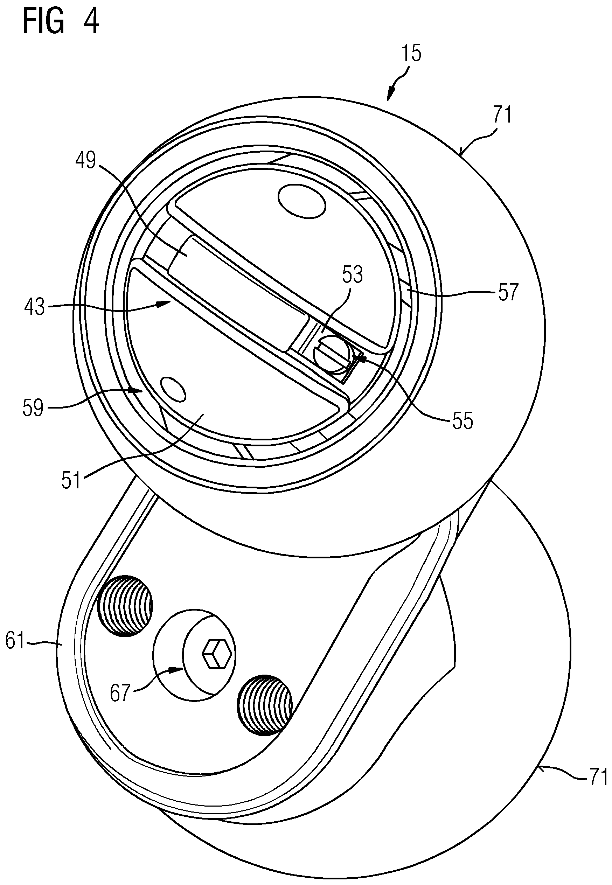

Figur 3 (FIG 3) und Figur 4 (FIG 4) zeigen ein Kontaktelement 15 des in Figur 1 gezeigten Spannungswandlers 1, wobei Figur 3 eine Schnittdarstellung des Kontaktelements 15 zeigt und Figur 4 eine perspektivische Darstellung des Kontaktelements 15 zeigt.

Das Kontaktelement 15 umfasst zwei Rollkontakte 43, 45. Jeder Rollkontakt 43, 45 weist ein Wälzlager 47 mit einem elektrisch leitfähigen Außenring 49 auf. Der Außenring 49 des ersten Rollkontakts 43 kontaktiert in der ersten Endstellung des Trägerelements 13 die Elektrode 7 der dem Kontaktelement 15 zugeordneten Primärwicklung 5. Der Außenring 49 des zweiten Rollkontakts 45 kontaktiert in der ersten Endstellung des Trägerelements 13 die Kontaktoberfläche 29 des dem Kontaktelement 15 zugeordneten Durchführungskontakts 11. Ferner weist jeder Rollkontakt 43, 45 eine elektrisch leitfähige Halterung 51 auf, in der das Wälzlager 47 angeordnet ist und die mit dem Außenring 49 des Wälzlagers 47 durch einen Gleitkontakt 53 elektrisch verbunden ist. Der Gleitkontakt 53 ist als eine Kontaktfeder ausgebildet, die durch eine Schraubverbindung 55 an der Halterung 51 befestigt ist und an dem Außenring 49 vorgespannt anliegt.

Jeder Rollkontakt 43, 45 ist durch ein Blattfederelement 57 federnd in einer Öffnung 59 eines elektrisch leitfähigen Grundkörpers 61 des Kontaktelements 15 gelagert. Das Blattfederelement 57 verbindet die Halterung 51 des Wälzlagers 47 außerdem elektrisch mit dem Grundkörper 61. Dabei wird der Rollkontakt 43, 45 in der Öffnung 59 mit einer Führung 63 geführt und das Blattfederelement 57 erstreckt sich außerhalb der Führung 63 von einem Öffnungsgrund 65 der Öffnung 59 zu der Halterung 51 des Wälzlagers 47. Die Führung 63 ist an dem Grundkörper 61 durch eine Schraubverbindung 67 befestigt.

Die Öffnungen 59 des Grundkörpers 61 des Kontaktelements 15 sind jeweils von einer Wand 69 des Grundkörpers 61 mit einer konvexen Außenoberfläche 71 umgeben. Die Kontaktelemente 15 sind mit Schraubverbindungen 73 an der Trägerplatte 33 befestigt.

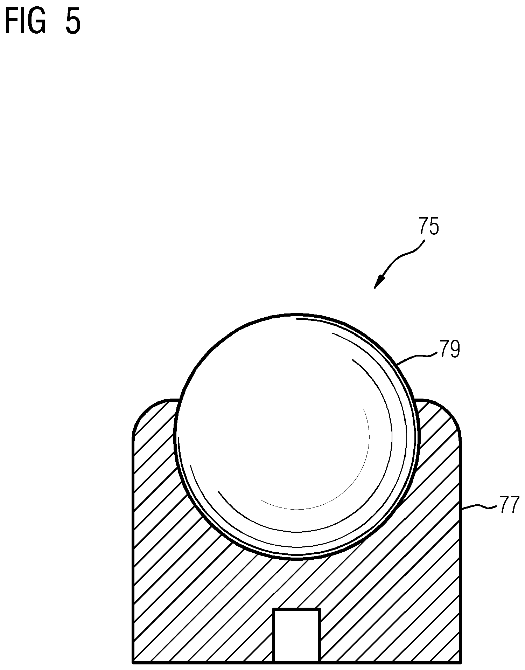

Figur 5 (FIG 5) zeigt schematisch einen Rollkontakt 75 eines Kontaktelements 15 eines zweiten Ausführungsbeispiels eines Spannungswandlers 1. Der Rollkontakt 75 weist eine in einem elektrisch leitfähigen Gleitlager 77 gelagerte elektrisch leitfähige Kugel 79 auf, wobei das Gleitlager 77 geschnitten dargestellt ist. Abgesehen von der Ausführung des Rollkontakts 75 unterscheidet sich das zweite Ausführungsbeispiel nicht von dem in den Figuren 1 bis 4 gezeigten ersten Ausführungsbeispiel eines Spannungswandlers 1. Jedes Kontaktelement 15 des zweiten Ausführungsbeispiels weist also zwei Rollkontakte 75 auf, die analog zu den Rollkontakten 43, 45 des in den Figuren 1 bis 4 gezeigten Ausführungsbeispiels jeweils federnd in einer Öffnung 59 des Grundkörpers 61 des Kontaktelements 15 gelagert sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Bei anderen Ausführungsbeispielen kann der Spannungswandler 1 beispielsweise statt einer sternförmigen Anordnung der Magnetkerne 9 eine Anordnung der Magnetkerne 9 entlang der drei Seiten eines gleichseitigen Dreiecks oder eine von Drei verschiedene Anzahl von Magnetkernen 9 und/oder Primärwicklungen 5 aufweisen.

## Patentansprüche

1. Spannungswandler (1), umfassend
- ein eine Durchführung (21) aufweisendes Kapselungsgehäuse (3),
- wenigstens eine Primärwicklung (5),
- für jede Primärwicklung (5) eine Elektrode (7), die mit einem Ende der Primärwicklung (5) elektrisch verbunden ist, und einen von der Primärwicklung (5) beabstandeten elektrischen Durchführungskontakt (11),
- ein zwischen einer ersten Endstellung und einer zweiten Endstellung um eine Drehachse (35) drehbares Trägerelement (13) und
- für jede Primärwicklung (5) ein an dem Trägerelement (13) angeordnetes elektrisch leitfähiges Kontaktelement (15), dem die Primärwicklung (5) und der zugehörige Durchführungskontakt (11) zugeordnet sind und das die Elektrode (7) der Primärwicklung (5) in der ersten Endstellung des Trägerelements (13) mit dem Durchführungskontakt (11) elektrisch verbindet und in der zweiten Endstellung des Trägerelements (13) von dem Durchführungskontakt (11) galvanisch trennt,
wobei in dem Kapselungsgehäuse (3) jede Primärwicklung (5), jeder Durchführungskontakt (11), das Trägerelement (13) und jedes Kontaktelement (15) angeordnet sind, wobei jeder Durchführungskontakt (11) an der Durchführung (21) angeordnet ist, **gekennzeichnet dadurch, dass** das Kontaktelement (15) wenigstens einen Rollkontakt (43, 45, 75) aufweist, über den das Kontaktelement (15) in der ersten Endstellung des Trägerelements (13) die Elektrode (7) der Primärwicklung (5) oder den Durchführungskontakt (11) kontaktiert, wobei jeder Rollkontakt eines genannten Kontaktelements durch wenigstens ein Blattfederelement federnd an einem Grundkörper des Kontaktelements gelagert ist, wobei jedes Blattfederelement den durch das Blattfederelement federnd gelagerten Rollkontakt mit dem Grundkörper des Kontaktelements elektrisch verbindet.

2. Spannungswandler (1) nach Anspruch 1, wobei jedes Kontaktelement (15) einen ersten Rollkontakt (43, 75), der in der ersten Endstellung des Trägerelements (13) die Elektrode (7) der dem Kontaktelement (15) zugeordneten Primärwicklung (5) kontaktiert, und einen zweiten Rollkontakt (45, 75), der in der ersten Endstellung des Trägerelements (13) den dem Kontaktelement (15) zugeordneten Durchführungskontakt (11) kontaktiert, aufweist.

3. Spannungswandler (1) nach Anspruch 1 oder 2, wobei der wenigstens eine Rollkontakt (43, 45) ein Wälzlager (47) mit einem elektrisch leitfähigen Außenring (49) aufweist, der in der ersten Endstellung des Trägerelements (13) die Elektrode (7) der dem Kontaktelement (15) zugeordneten Primärwicklung (5) oder den dem Kontaktelement (15) zugeordneten Durchführungskontakt (11) kontaktiert.

4. Spannungswandler (1) nach Anspruch 3, wobei jeder ein Wälzlager (47) aufweisender Rollkontakt (43, 45) eine elektrisch leitfähige Halterung (51) aufweist, in der das Wälzlager (47) angeordnet ist und die mit dem Außenring (49) des Wälzlagers (47) durch einen Gleitkontakt (53) elektrisch verbunden ist.

5. Spannungswandler (1) nach einem der vorhergehenden Ansprüche, wobei der wenigstens eine Rollkontakt (75) eine in einem elektrisch leitfähigen Gleitlager (77) gelagerte elektrisch leitfähige Kugel (79) aufweist, die in der ersten Endstellung des Trägerelements (13) die Elektrode (7) der dem Kontaktelement (15) zugeordneten Primärwicklung (5) oder den dem Kontaktelement (15) zugeordneten Durchführungskontakt (11) kontaktiert.

6. Spannungswandler (1) nach einem der vorhergehenden Ansprüche, wobei jeder Rollkontakt (43, 45, 75) eines Kontaktelements (15) federnd an einem Grundkörper (61) des Kontaktelements (15) gelagert ist.

7. Spannungswandler (1) nach Anspruch 6, wobei jeder Rollkontakt (43, 45, 75) federnd in einer Öffnung (59) des Grundkörpers (61) des Kontaktelements (15) gelagert ist.

8. Spannungswandler (1) nach einem der vorhergehenden Ansprüche, wobei die wenigstens eine Primärwicklung mit drei Primärwicklungen (5) gegeben ist, die voneinander beabstandet um die Drehachse (35) des Trägerelements (13) herum angeordnet sind.

9. Spannungswandler (1) nach Anspruch 8, wobei die Primärwicklungen (5) um 120 Grad gegeneinander versetzt um die Drehachse (35) des Trägerelements (13) herum angeordnet sind und das Trägerelement (13) um 60 Grad um die Drehachse (35) zwischen den beiden Endstellungen drehbar ist.

10. Spannungswandler (1) nach einem der vorhergehenden Ansprüche, wobei das Trägerelement (13) eine Trägerplatte (33), an der jedes Kontaktelement (15) angeordnet ist, und eine mit der Trägerplatte (33) verbundene Trägerwelle (31), durch die die Drehachse (35) verläuft, aufweist.

11. Spannungswandler (1) nach Anspruch 10, wobei die Trägerplatte (33) in einer Ebene zwischen einem ersten Raumbereich, in dem jede Primärwicklung (5) angeordnet ist, und einem zweiten Raumbereich, in dem jeder Durchführungskontakt (11) angeordnet ist, angeordnet ist.

12. Spannungswandler (1) nach einem der vorhergehenden Ansprüche, wobei jeder Durchführungskontakt (11) eine konvexe Kontaktoberfläche (29) aufweist, die in der ersten Endstellung des Trägerelements (13) von einem Rollkontakt (43, 45, 75) kontaktiert wird.

## Claims

1. Voltage converter (1), comprising
- an encapsulating housing (3) having a bushing (21),
- at least one primary winding (5),
- for each primary winding (5) an electrode (7), which is electrically connected to an end of the primary winding (5), and an electrical bushing contact (11) spaced apart from the primary winding (5),
- a carrier element (13) rotatable between a first end position and a second end position about an axis of rotation (35) and
- for each primary winding (5) an electrically conductive contact element (15) arranged on the carrier element (13), to which the primary winding (5) and the associated bushing contact (11) are assigned and which electrically connects the electrode (7) of the primary winding (5) in the first end position of the carrier element (13) to the bushing contact (11) and in the second end position of the carrier element (13) galvanically separates it from the bushing contact (11), wherein in the encapsulating housing (3) each primary winding (5), each bushing contact (11), the carrier element (13) and each contact element (15) are arranged, wherein each bushing contact (11) is arranged on the bushing (21),
**characterized in that**
the contact element (15) has at least one rolling contact (43, 45, 75), via which the contact element (15) in the first end position of the carrier element (13) contacts the electrode (7) of the primary winding (5) or the bushing contact (11), wherein each rolling contact of a said contact element is resiliently mounted by at least one leaf spring element on a base body of the contact element, wherein each leaf spring element electrically connects the rolling contact resiliently mounted by the leaf spring element to the base body of the contact element.

2. Voltage converter (1) according to claim 1, wherein each contact element (15) has a first rolling contact (43, 75), which contacts the electrode (7) of the primary winding (5) assigned to the contact element (15) in the first end position of the carrier element (13), and a second rolling contact (45, 75), which contacts the bushing contact (11) assigned to the contact element (15) in the first end position of the carrier element (13).

3. Voltage converter (1) according to claim 1 or 2, wherein the at least one rolling contact (43, 45) has a rolling bearing (47) with an electrically conductive outer ring (49), which contacts the electrode (7) of the primary winding (5) assigned to the contact element (15) or the bushing contact (11) assigned to the contact element (15) in the first end position of the carrier element (13).

4. Voltage converter (1) according to claim 3, wherein each rolling contact (43, 45) having a rolling bearing (47) has an electrically conductive holder (51), in which the rolling bearing (47) is arranged and which is electrically connected to the outer ring (49) of the rolling bearing (47) by a sliding contact (53).

5. Voltage converter (1) according to one of the preceding claims, wherein the at least one rolling contact (75) has an electrically conductive ball (79) mounted in an electrically conductive sliding bearing (77), which contacts the electrode (7) of the primary winding (5) assigned to the contact element (15) or the bushing contact (11) assigned to the contact element (15) in the first end position of the carrier element (13).

6. Voltage converter (1) according to one of the preceding claims, wherein each rolling contact (43, 45, 75) of a contact element (15) is resiliently mounted on a base body (61) of the contact element (15).

7. Voltage converter (1) according to claim 6, wherein each rolling contact (43, 45, 75) is resiliently mounted in an opening (59) of the base body (61) of the contact element (15).

8. Voltage converter (1) according to one of the preceding claims, wherein the at least one primary winding is given by three primary windings (5), which are arranged spaced apart from one another around the axis of rotation (35) of the carrier element (13).

9. Voltage converter (1) according to claim 8, wherein the primary windings (5) are arranged offset from one another by 120 degrees around the axis of rotation (35) of the carrier element (13) and the carrier element (13) is rotatable by 60 degrees about the axis of rotation (35) between the two end positions.

10. Voltage converter (1) according to one of the preceding claims, wherein the carrier element (13) has a carrier plate (33), on which each contact element (15) is arranged, and a carrier shaft (31) connected to the carrier plate (33), through which the axis of rotation (35) runs.

11. Voltage converter (1) according to claim 10, wherein the carrier plate (33) is arranged in a plane between a first spatial region, in which each primary winding (5) is arranged, and a second spatial region, in which each bushing contact (11) is arranged.

12. Voltage converter (1) according to one of the preceding claims, wherein each bushing contact (11) has a convex contact surface (29), which is contacted by a rolling contact (43, 45, 75) in the first end position of the carrier element (13) .

## Revendications

1. Convertisseur de tension (1) comprenant
- un boîtier d'encapsulation (3), présentant un passage (21),
- au moins un enroulement primaire (5),
- pour chaque enroulement primaire (5), une électrode (7) qui est reliée électriquement à une extrémité de l'enroulement primaire (5) et un contact électrique traversant (11) espacé de l'enroulement primaire (5),
- un élément de support (13), apte à tourner autour d'un axe de rotation (35) entre une première position d'extrémité et une deuxième position d'extrémité, et
- pour chaque enroulement primaire (5), un élément de contact (15) électriquement conducteur agencé sur l'élément de support (13), auquel sont associés l'enroulement primaire (5) et le contact traversant (11) correspondant et qui relie électriquement l'électrode (7) de l'enroulement primaire (5) dans la première position d'extrémité de l'élément de support (13) avec le contact traversant (11) et le sépare galvaniquement du contact traversant (11) dans la deuxième position d'extrémité de l'élément de support (13), chaque enroulement primaire (5), chaque contact traversant (11), l'élément de support (13) et chaque élément de contact (15) étant agencés dans le boîtier d'encapsulation (3), chaque contact traversant (11) étant agencé sur le passage (21),
**caractérisé en ce que**
l'élément de contact (15) présente au moins un contact roulant (43, 45, 75) par l'intermédiaire duquel l'élément de contact (15), dans la première position d'extrémité de l'élément de support (13), vient en contact avec l'électrode (7) de l'enroulement primaire (5) ou avec le contact traversant (11), chaque contact roulant d'un élément de contact mentionné étant monté de manière élastique sur un corps de base de l'élément de contact par au moins un élément à ressort à lame, chaque élément à ressort à lame reliant électriquement le contact roulant monté de manière élastique par l'élément à ressort à lame au corps de base de l'élément de contact.

2. Convertisseur de tension (1) selon la revendication 1, dans lequel chaque élément de contact (15) présente un premier contact roulant (43, 75) qui, dans la première position d'extrémité de l'élément de support (13), vient en contact avec l'électrode (7) de l'enroulement primaire (5) associé à l'élément de contact (15), et un deuxième contact roulant (45, 75) qui, dans la première position d'extrémité de l'élément de support (13), vient en contact avec le contact traversant (11) associé à l'élément de contact (15).

3. Convertisseur de tension (1) selon la revendication 1 ou la revendication 2, dans lequel ledit au moins un contact roulant (43, 45) présente un roulement (47) muni d'un anneau extérieur (49) électriquement conducteur qui, dans la première position d'extrémité de l'élément de support (13), est en contact avec l'électrode (7) de l'enroulement primaire (5) associé à l'élément de contact (15) ou avec le contact traversant (11) associé à l'élément de contact (15).

4. Convertisseur de tension (1) selon la revendication 3, dans lequel chaque contact roulant (43, 45) comprenant un roulement (47) comprend un support électriquement conducteur (51) dans lequel est agencé le roulement (47) et qui est relié électriquement à l'anneau extérieur (49) du roulement (47) par un contact glissant (53).

5. Convertisseur de tension (1) selon l'une des revendications précédentes, dans lequel ledit au moins un contact roulant (75) comprend une bille électriquement conductrice (79) logée dans un palier lisse (77) électriquement conducteur, qui, dans la première position d'extrémité de l'élément de support (13), est en contact avec l'électrode (7) de l'enroulement primaire (5) associé à l'élément de contact (15) ou avec le contact traversant (11) associé à l'élément de contact (15).

6. Convertisseur de tension (1) selon l'une des revendications précédentes, dans lequel chaque contact roulant (43, 45, 75) d'un élément de contact (15) est monté de manière élastique sur un corps de base (61) de l'élément de contact (15).

7. Convertisseur de tension (1) selon la revendication 6, dans lequel chaque contact roulant (43, 45, 75) est monté de manière élastique dans une ouverture (59) du corps de base (61) de l'élément de contact (15).

8. Convertisseur de tension (1) selon l'une des revendications précédentes, dans lequel ledit au moins un enroulement primaire comprend trois enroulements primaires (5) qui sont espacés les uns des autres et agencés autour de l'axe de rotation (35) de l'élément de support (13).

9. Convertisseur de tension (1) selon la revendication 8, dans lequel les enroulements primaires (5) sont agencés autour de l'axe de rotation (35) de l'élément de support (13) en étant décalés de 120 degrés les uns par rapport aux autres, et dans lequel l'élément de support (13) est apte à pivoter de 60 degrés autour de l'axe de rotation (35) entre les deux positions d'extrémité.

10. Convertisseur de tension (1) selon l'une des revendications précédentes, dans lequel l'élément de support (13) comprend une plaque de support (33) sur laquelle est agencé chaque élément de contact (15) et un arbre de support (31) relié à la plaque de support (33) et traversé par l'axe de rotation (35).

11. Convertisseur de tension (1) selon la revendication 10, dans lequel la plaque de support (33) est agencée dans un plan situé entre une première zone spatiale dans laquelle chaque enroulement primaire (5) est agencé et une deuxième zone spatiale dans laquelle chaque contact traversant (11) est agencé.

12. Convertisseur de tension (1) selon l'une des revendications précédentes, dans lequel chaque contact traversant (11) présente une surface de contact convexe (29) qui, dans la première position d'extrémité de l'élément de support (13), est en contact avec un contact roulant (43, 45, 75).
